Europäisches Patentamt

European Patent Office

Office européen des brevets

(19)

(11) Veröffentlichungsnummer: **0 290 956 B1**

(12) **EUROPÄISCHE PATENTSCHRIFT**

(45) Veröffentlichungstag der Patentschrift: 30.10.91

(51) Int. Cl.⁵: **B01D 45/08**, B01D 45/16, B03C 3/01

(21) Anmeldenummer: 88107214.4

(22) Anmeldetag: 05.05.88

(54) **Staubabscheide-Vorrichtung.**

(30) Priorität: 14.05.87 DE 3716126

(43) Veröffentlichungstag der Anmeldung:
17.11.88 Patentblatt 88/46

(45) Bekanntmachung des Hinweises auf die
Patenterteilung:
30.10.91 Patentblatt 91/44

(84) Benannte Vertragsstaaten:
AT CH DE ES FR GB IT LI NL

(56) Entgegenhaltungen:
DE-U- 1 703 648
FR-A- 1 037 701
US-A- 1 603 878

SOVIET INVENTIONS ILLUSTRATED, Woche
D37, 21. Oktober 1981, Nr. 67540/D37, Derwent Publications Ltd, London, GB; SU-
A-790103 (SIBE HEAT ENG. RES.) 28-12-1980

(73) Patentinhaber: **METALLGESELLSCHAFT AG**
**Reuterweg 14 Postfach 3724**
**W-6000 Frankfurt/M.1(DE)**

(72) Erfinder: **Jury, Egon, Dipl.-Ing.**
**W.-Borchert-Strasse 16**
**W-6073 Egelsbach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zum Abscheiden von Staub aus einem Gasstrom mittels Zentrifugalkräften, bestehend im wesentlichen aus im Gaskanal, gitterartig im Wechsel angeordneten Stau- und Umlenkkörpern, wobei letztere aus je zwei in Strömungsrichtung symmetrisch angeordneten Umlenkblechen und einem Abschälblech gebildet sind, die zusammen einen Hohlraum umschließen, der über Schlitze zwischen den stromab gelegenen Kanten der Umlenkbleche und den stromauf gelegenen Kanten der Abschälbleche mit dem Gasströmungsraum in Verbindung steht.

Eine derartige Vorrichtung ist im Prinzip aus dem DE-U- 17 03 648 bekannt. Es hat sich jedoch gezeigt, daß diese bekannte Vorrichtung einen verhältnismäßig großen Druckverlust aufweist und bestenfalls in der Lage ist, bis zu 20 % der abzuscheidenden Staubmenge aus dem Gasstrom abzutrennen, wobei gleichzeitig eine klassierende Wirkung zu beobachten ist, indem nämlich insbesondere die gröbere Staubfraktion in den Hohlraum gelangt.

Der Erfindung liegt die Aufgabe zugrunde, die Abscheideleistung der bekannten Vorrichtung zu verbessern und insbesondere deren Druckverlust zu senken, so daß ein größerer Anteil der insgesamt abzuscheidenden Staubmenge aus dem Gasstrom abgeschieden werden kann, daß dies mit einem kleineren Druckverlust verbunden ist und daß eine nachfolgende Staubabscheidervorrichtung entsprechend kleiner dimensioniert werden kann.

Diese Aufgabe wird erfindungsgemäß dadurch gelöst, daß die Staukörper einen geschlossenen halbkreisförmigen Querschnitt aufweisen, dessen gerade Seite stromauf und senkrecht zum Gasstrom angeordnet ist und an dessen stromab gelegener Kreisbogenseite ein parallel zur Gasströmung gerichtetes, ebenes Trennblech angeordnet ist. Zweckmäßigerweise sind die Staukörper quer zur Gasströmung etwa dreimal so breit wie der zwischen je zwei Staukörpern verbleibende freie Gasströmungsquerschnitt. Das Verhältnis der in Strömungsrichtung gemessenen Länge 1 des Trennblechs zur Breite b des Staukörpers quer zur Strömungsrichtung, kann zwischen 0,5 und 1,35 liegen, wobei geringste Strömungsverluste bei einem Verhältnis 1 zu b zwischen 0,8 und 1 ermittelt wurden.

Die erfindungsgemäße Vorrichtung wird vorteilhafterweise bei einem Staubabscheideverfahren verwendet, das dadurch gekennzeichnet ist, daß über die Schlitze und Hohlräume ein Teilgasstrom aus dem Hauptgasstrom abgeleitet wird. Zweckmäßige Ausführungsformen dieses Verfahrens sind in den Ansprüchen 6 bis 9 beschrieben.

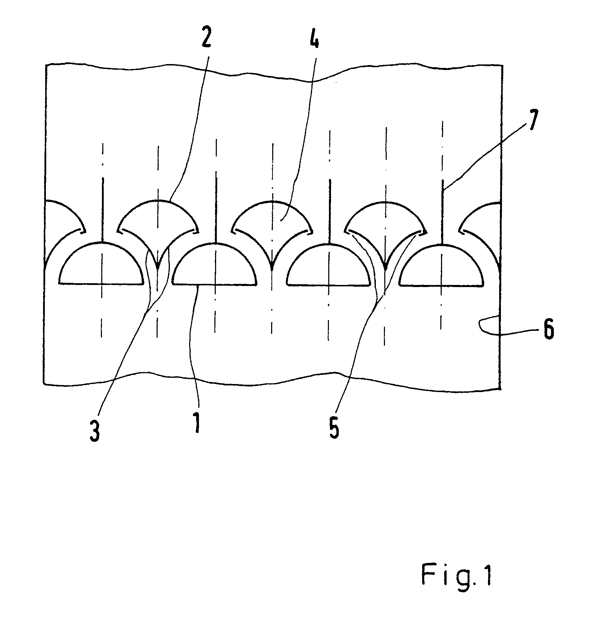

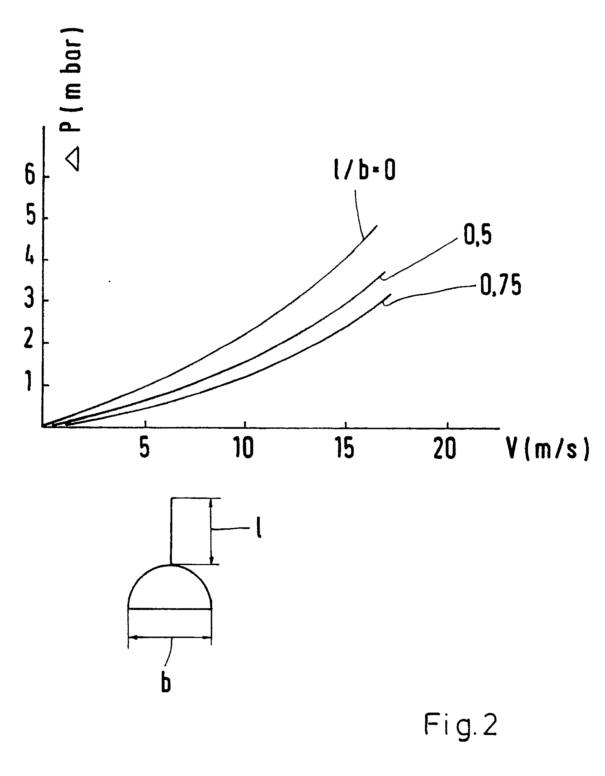

Weitere Einzelheiten und Vorteile des Erfindungsgedankens werden anhand des in Figur 1 dargestellten Ausführungsbeispiels sowie der in Figur 2 wiedergegebenen Meßergebnisse näher erläutert:

Figur 1 zeigt eine Ausführungsform der gitterartigen Vorrichtung im Querschnitt.

Figur 2 zeigt den Druckverlust der Vorrichtung in Abhängigkeit von der Strömungsgeschwindigkeit und von der Länge des Trennblechs.

In Figur 1 ist ein Abschnitt eines Gaskanals dargestellt, der durch die Wand (6) begrenzt wird. In diesem Kanal sind im Querschnitt halbkreisförmige Staukörper (1) angeordnet und versetzt dazu Umlenkkörper, bei denen ein Hohlraum (4) von zwei in Strömungsrichtung symmetrisch angeordneten Umlenkblechen (3) und einem Abschälblech (2) umschlossen ist. Zwischen den stromab gelegenen Kanten der Umlenkbleche (3) und den stromauf gelegenen Kanten des Abschälblechs (2) sind Schlitze (5) ausgebildet, über die der Hohlraum (4) mit dem Gasströmungsraum in Verbindung steht. Erfindungsgemäß weisen die Staukörper (1) an den stromab gelegenen Kreisbogenseiten je ein parallel zur Gasströmungsrichtung angeordnetes ebenes Trennblech (7) auf, womit der Strömungswiderstand der Vorrichtung günstig beeinflußt werden kann.

Im Betrieb strömt das Gas durch die freien Zwischenräume zwischen den Staukörpern (1) hindurch und wird an den Umlenkblechen (3) umgelenkt. Dabei treten Querbeschleunigungen auf, die sich auf die Staubpartikel stärker auswirken als auf das Gas, wodurch es im äußeren Bereich der Teilströme zu einer Staubanreicherung kommt. Wird nun durch die Schlitze (5) eine definierte Gasmenge aus dem Gasstrom abgezweigt, so enthält diese Teilmenge eine wesentlich höhere Staubkonzentration als der Gasstrom vor Eintritt in die Vorrichtung. Auf diese Weise können mit einem Teilgasstrom in der Größenordnung von 3 bis 6 % bis zu 40 % der ursprünglich vorhandenen Staubmenge aus dem Gasstrom abgeführt und eine im Gasstrom anschließend angeordnete Entstaubungseinrichtung entsprechend kleiner ausgelegt werden. Die Teilgasmenge mit dem erhöhten Staubgehalt muß separat auf den End-Staubgehalt oder nur bis auf den Staubgehalt des Hauptgasstroms nach dem Durchgang durch die erfindungsgemäße Vorrichtung entstaubt werden, was insgesamt aber wesentlich weniger aufwendig ist, als bei einem Verzicht auf eine Staubvorabscheidung mittels der erfindungsgemäßen Vorrichtung.

Aus Figur 2 ist zu ersehen, wie sich der durch die Vorrichtung verursachte Druckverlust Δ p in Abhängigkeit von der Gasgeschwindigkeit V und dem Verhältnis der Länge 1 des Trennblechs zur Breite b des Staukörpers ändert. Bei umfangreichen Versuchen wurde festgestellt, daß im gesamten untersuchten Geschwindigkeitsbereich der Druckverlust vom Ausgangswert 1/b = 0, d.h. Staukörper (1) ohne Trennblech (7), bis zu Werten 1/b von etwa 0,75 stetig abnimmt, bei größeren Werten 1/b aber wieder ansteigt. Selbstverständlich wird das Optimum für 1/b noch durch andere Parameter, wie z.B. Gastemperatur, Gaszusammensetzung, Staubgehalt usw. beeinflußt. Man kann aber - ausgehend vom einem Wert von 0,75 - verhältnismäßig einfach feststellen, wo im konkreten Anwendungsfall der Bestwert für 1/b liegt.

## Patentansprüche

1. Vorrichtung zum Abscheiden von Staub aus einem Gasstrom mittels Zentrifugalkräften, bestehend im wesentlichen aus im Gaskanal, gitterartig im Wechsel angeordneten Stau- und Umlenkkörpern, wobei letztere aus je zwei in Strömungsrichtung symmetrisch angeordneten Umlenkblechen (3) und einem Abschälblech (2) gebildet sind, die zusammen einen Hohlraum (4) umschließen, der über Schlitze (5) zwischen den stromab gelegenen Kanten der Umlenkbleche (3) und den stromauf gelegenen Kanten der Abschälbleche (2) mit dem Gasströmungsraum in Verbindung steht, dadurch gekennzeichnet, daß die Staukörper (1) einen geschlossenen halbkreisförmigen Querschnitt aufweisen, dessen gerade Seite stromauf und senkrecht zum Gasstrom angeordnet ist und an dessen stromab gelegener Kreisbogenseite ein parallel zur Gasströmung gerichtetes, ebenes Trennblech (7) angeordnet ist.

2. Vorrichtung nach Anspruch 1, dadurch gekennzeichnet, daß die Staukörper quer zur Gasströmung etwa dreimal so breit sind wie der zwischen je zwei Staukörpern verbleibende freie Gasströmungsquerschnitt.

3. Vorrichtung nach Anspruch 1 oder 2, dadurch gekennzeichnet, daß das Verhältnis der in Strömungsrichtung gemessenen Länge 1 des Trennblechs zur Breite b des Staukörpers quer zur Strömungsrichtung zwischen 0,5 und 1,35 liegt.

4. Vorrichtung nach Anspruch 3, dadurch gekennzeichnet, daß das Verhältnis 1/b zwischen 0,8 und 1 liegt.

5. Anwendung der Vorrichtung gemäß einem der Ansprüche 1 bis 4 in einem Staubabscheidungsverfahren, dadurch gekennzeichnet, daß über die Schlitze und Hohlräume ein Teilgasstrom aus dem Hauptgasstrom abgeleitet wird.

6. Anwendung nach Anspruch 5, dadurch gekennzeichnet, daß 3 bis 6 % des Hauptgasstromes abgeleitet werden.

7. Anwendung nach Anspruch 5 oder 6, dadurch gekennzeichnet, daß das zum Ableiten des Teilgasstroms an den Schlitzen erforderliche Druckgefälle dadurch aufrecht erhalten wird, daß zwischen den Hohlräumen der Umlenkkörper und einem stromab gelegenen Bereich des Gasstroms mit entsprechend niedrigerem Druck eine direkte Verbindung hergestellt wird.

8. Anwendung nach Anspruch 5 oder 6, dadurch gekennzeichnet, daß das zum Ableiten des Teilgasstroms an den Schlitzen erforderliche Druckgefälle durch ein besonderes Gebläse aufrecht erhalten wird.

9. Anwendung der Vorrichtung nach einem der Ansprüche 1 bis 4 als Vorabscheider vor einem elektrostatischen Staubabscheider.

## Claims

1. Apparatus for collecting dust from a gas stream by means of centrifugal forces, essentially consisting of restraining and deflecting members disposed alternately in a grid-like manner in the gas channel, the latter members each being formed of two deflecting plates (3) disposed symmetrically in the direction of flow and a stripping plate (2), which together enclose a cavity (4) which communicates with the gas flow space via slots (5) between the downstream edges of the deflecting plates (3) and the upstream edges of the stripping plates (2), characterised in that the restraining members (1) have a closed semicircular cross-section, the straight side of which is disposed upstream and at right-angles to the gas stream, and on the downstream arcuate side of which a planar partition plate (7) is disposed which is aligned parallel to the gas flow.

2. Apparatus according to Claim 1, characterised in that the restraining members, transversely to the gas flow, are approximately three times as wide as the free gas flow cross-section remaining between two restraining members each time.

3. Apparatus according to Claim 1 or 2, characterised in that the ratio of the length 1 of the partition plate, measured in the direction of flow, to the width b of the restraining member transversely to the direction of flow is between 0.5 and 1.35.

**4.** Apparatus according to Claim 3, characterised in that the ratio 1/b is between 0.8 and 1.

**5.** Application of the apparatus according to one of Claims 1 to 4 in a dust collection process, characterised in that a partial gas stream is branched off from the main gas stream via the slots and cavities.

**6.** Application according to Claim 5, characterised in that 3 to 6% of the main gas stream is branched off.

**7.** Application according to Claim 5 or 6, characterised in that the pressure drop necessary for branching off the partial gas stream at the slots is maintained in that a direct communication is produced between the cavities of the deflecting members and a downstream region of the gas stream with correspondingly lower pressure.

**8.** Application according to Claim 5 or 6, characterised in that the pressure drop required for branching off the partial gas stream at the slots is maintained by a special fan.

**9.** Application of the apparatus according to one of Claims 1 to 4 as a preliminary separator preceding an electrostatic dust collector.

**Revendications**

**1.** Appareil destiné à séparer de la poussière d'un courant gazeux au moyen des forces centrifuges, constitué essentiellement de pièces de barrage et des pièces de déviation disposées dans le canal pour le gaz en alternance à la manière d'une grille, ces dernières étant constituées de deux tôles de déviation (3) disposées symétriquement dans le sens de l'écoulement et d'une tôle de forme conchoïdale (2), qui enferment ensemble un espace vide (4) communiquant, par des fentes (5) entre les bords des tôles de déviation (3) situées en aval et les bords des tôles de forme conchoïdale (2) situées en amont, avec l'espace réservé à l'écoulement du gaz, caractérisé en ce que les pièces de barrage présentent une section transversale hémi-circulaire fermée, dont le côté rectiligne est disposé en amont et perpendiculairement à l'écoulement gazeux et sur les côté en arc de cercle et situés en aval de laquelle est prévue une tôle de séparation (7) plane et dirigée parallèlement à l'écoulement du gaz.

**2.** Appareil suivant la revendication 1, caractérisé en ce que les pièces de barrage sont, transversalement à l'écoulement du gaz, à peu près trois fois plus larges que la section transversale libre d'écoulement du gaz qui subsiste entre deux pièces de barrage.

**3.** Appareil suivant la revendication 1 ou 2, caractérisé en ce que le rapport de la longueur 1 de la tôle de séparation, mesurée dans la direction de l'écoulement à la largeur b de la pièce de barrage transversalement à la direction de l'écoulement est compris entre 0,5 et 1,35.

**4.** Appareil suivant la revendication 3, caractérisé en ce que le rapport 1/b est compris entre 0,8 et 1.

**5.** Utilisation de l'appareil suivant l'une des revendications 1 à 4 dans un procédé de séparation de la poussière, caractérisée en ce qu'un courant partiel de gaz est dévié du courant principal de gaz par les fentes et par les espaces vides.

**6.** Utilisation suivant la revendication 5, caractérisée en ce que 3 à 6 % du courant principal de gaz sont déviés.

**7.** Utilisation suivant la revendication 5 ou 6, caractérisée en ce que la chute de pression nécessaire pour dévier le courant partiel de gaz sur les fentes est maintenue par le fait que l'on ménage une liaison directe entre les espaces vides des pièces de déviation et une région du courant gazeux située en aval et ayant une pression plus faible adéquate.

**8.** Utilisation suivant la revendication 5 ou 6, caractérisée en ce que la chute de pression nécessaire pour dévier le courant partiel de gaz sur les fentes est maintenue par un ventilateur particulier.

**9.** Utilisation de l'appareil suivant l'une des revendications 1 à 4 comme préséparateur en amont d'un séparateur électrostatique de poussière.

Fig.1

Fig.2